(19) Europäisches Patentamt / European Patent Office / Office européen des brevets

(11) **EP 4 741 274 A1**

(12) **EUROPÄISCHE PATENTANMELDUNG**

(43) Veröffentlichungstag:
**13.05.2026   Patentblatt 2026/20**

(21) Anmeldenummer: **25180749.1**

(22) Anmeldetag: **04.06.2025**

(51) Internationale Patentklassifikation (IPC):
*B63B 7/00* (2020.01)      *B63B 32/40* (2020.01)
*B63H 8/00* (2020.01)      *F16K 15/18* (2006.01)
*F16K 15/20* (2006.01)      *F16K 31/524* (2006.01)

(52) Gemeinsame Patentklassifikation (CPC):
**B63B 7/00; B63B 32/40; B63H 8/00; F16K 15/182;
F16K 15/20; F16K 31/52408; F16K 31/60**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **08.11.2024   DE 102024132694**

(71) Anmelder: **Boards & More GmbH
4591 Molln (AT)**

(72) Erfinder:
• **BITTEROLF, Ulrich
87435 Kempten (DE)**
• **MATHES, Aron
82041 Oberhaching (DE)**

(74) Vertreter: **MERH-IP Matias Erny Reichl Hoffmann
Patentanwälte PartG mbB
Paul-Heyse-Straße 29
80336 München (DE)**

(54) **AUFBLASBARES WASSERSPORTGERÄT, VENTILVORRICHTUNG UND VENTILSYSTEM**

(57)    Die Erfindung stellt ein aufblasbares Wassersportgerät bereit, das zumindest eine aufblasbare Struktur mit einer Ventilvorrichtung 1000 umfasst, über die einem Innenraum der Struktur Luft zugeführt werden kann. Die Ventilvorrichtung 1000 umfasst ein Ventilgehäuse 10 mit einer Durchlassöffnung 110 und einen über eine Lagerung beweglich am Ventilgehäuse 10 angebrachten Ventilkörper 20 zum luftdichten Verschließen der Durchlassöffnung 110. Der Ventilkörper 20 ist über die Lagerung um eine Drehachse gegenüber dem Ventilgehäuse 10 drehbar, wobei die Lagerung derart ausgeführt ist, dass der Ventilkörper 20 ausgehend von einer ersten Winkelstellung, in der der Ventilkörper 20 zumindest eine die Durchlassöffnung verschließende Schließstellung einnehmen kann, durch ein Drehen um die Drehachse mit einem Betätigungswinkel $\alpha$, mit $0° < \alpha < 360°$, in eine zweite Winkelstellung verbracht werden kann, in der der Ventilkörper 20 zumindest eine die Durchlassöffnung freigebende Öffnungsstellung und keine Schließstellung einnehmen kann. Die Lagerung ist derart ausgeführt, dass diese eine durchgehende Drehung des Ventilkörpers 20 gestattet, sodass der Ventilkörper 20 ausgehend von der ersten Winkelstellung durch ein Drehen um die Drehachse mit einem Drehwinkel $\beta_n = \alpha + n \cdot 360°$ für jedes $n \in \mathbb{Z}$ in die zweite Winkelstellung verbracht werden kann.

Fig. 1B

## Beschreibung

### Technisches Gebiet

Die vorliegende Erfindung betrifft ein aufblasbares Wassersportgerät, eine Ventilvorrichtung zum Einsatz mit einem aufblasbaren Wassersportgerät und ein Ventilsystem.

### Hintergrund der Erfindung

Aus dem Bereich des Wassersports und insbesondere aus dem Bereich des Surfsport sind aufblasbare Wassersportgeräte bzw. Surfsportgeräte bekannt, die erst nach Aufblasen einer aufblasbaren Struktur bestimmungsgemäß verwendet werden können. Dies hat unter anderem den Vorteil, dass die betreffenden Geräte im unaufgeblasenen Zustand platzsparend transportiert werden können und erst am Bestimmungsort durch das Aufblasen ihre für die Verwendung vorgesehene finale Form erreichen.

Als nicht beschränkende Beispiele seien ein aufblasbares Flügelrigg (engl.: Wing), oder ein aufblasbarer Kite genannt, bei denen es sich um Surfsportgeräte handelt, mittels dessen sich der Nutzer auf einem Board über Wasser, aber auch über Land (Eis, Schnee, Sand etc.) ziehen lassen kann.

Bei einem sogenannten Kite steuert der Nutzer das Sportgerät über eine sogenannte Bar, an der Leinen befestigt sind, die die Bar mit einem bei der Nutzung fliegenden Segelschirm verbinden. Im Gegensatz dazu hält der Nutzer eines Flügelrigg das Sportgerät ohne solche Leinen direkt mit den Händen, entweder an Griffen oder einem Führungsstab, einem sogenannten Baum (engl.: Boom).

Typischerweise weisen ein aufblasbarer Kite oder ein aufblasbares Flügelrigg eine aufblasbare Fronttube auf, die als Anströmkante für den Wind dient. Zusätzlich können noch sich zur Fronttube im Wesentlichen quer erstreckende aufblasbare Quertubes vorgesehenen sein, die im aufgeblasenen Zustand zusammen mit der Fronttube ein Segeltuch aufspannen.

Andere Beispiele für aufblasbare Wassersportgeräte sind jeweils aufblasbare Kanus, Kajaks, Schlauboote, Raftingboote, SUP-Boards (Stand-Up-Paddle Boards), Surfbretter oder Wingboards.

Zum Befüllen oder Entleeren der aufblasbaren Strukturen weisen diese üblicherweise eine Ventilvorrichtung auf, die eine Außenhaut der Struktur durchsetzt, um über diese einem Innenraum der Struktur Luft zu- oder abzuführen. Das Zuführen erfolgt hierbei aufgrund des vergleichsweise großen Luftvolumens über eine Pumpenvorrichtung, deren Anschlussadapter mit der Ventilvorrichtung gekoppelt wird.

Im Hinblick auf eine gewichtseinsparende Ausführung sind solche Ventilvorrichtungen üblicherweise aus Kunststoff hergestellt. Im Zuge jedes Befüllens und Entleerens wird dabei zwangsweise die Ventilvorrichtung betätigt, wodurch diese mechanisch belastet wird. Diese Belastung verschleißt die Ventilvorrichtung zunehmend und kann bei unachtsamer Handhabung der Ventilvorrichtung sogar leicht zu einer Beschädigung derselbigen führen, insbesondere vor dem Hintergrund, dass die Wassersportgeräte und damit auch die Ventilvorrichtung regelmäßig für das Material extremen Verhältnissen ausgesetzt sind, beispielsweise in Form der Druckbelastung im aufgeblasenen Zustand, UV-Strahlung, Wärme, Kälte, Salzwasser, Sand etc.

### Zusammenfassung

Eine Aufgabe der vorliegenden Erfindung ist es daher, ein im Hinblick auf ein Befüllen und Entleeren robusteres aufblasbares Wassersportgerät zu schaffen.

Zur Lösung dieser Aufgabe wird ein aufblasbares Wassersportgerät nach Anspruch 1, eine Ventilvorrichtung zum Einsatz mit einem Wassersportgerät nach Anspruch 12 und ein Ventilsystem nach Anspruch 15 bereitgestellt.

Die jeweiligen abhängigen Ansprüche beziehen sich dabei auf bevorzugte Ausführungsformen, die jeweils für sich genommen oder in Kombination bereitgestellt werden können.

Gemäß einem ersten Aspekt der Erfindung wird ein aufblasbares Wassersportgerät bereitgestellt, das zumindest eine aufblasbare Struktur mit einer Ventilvorrichtung umfasst, über die einem Innenraum der Struktur Luft zugeführt werden kann. Die Ventilvorrichtung umfasst ein Ventilgehäuse mit einer Durchlassöffnung und einen über eine Lagerung beweglich am Ventilgehäuse angebrachten Ventilkörper zum luftdichten Verschließen der Durchlassöffnung. Der Ventilkörper ist über die Lagerung um eine Drehachse gegenüber dem Ventilgehäuse drehbar, wobei die Lagerung derart ausgeführt ist, dass der Ventilkörper ausgehend von einer ersten Winkelstellung, in der der Ventilkörper zumindest eine die Durchlassöffnung verschließende Schließstellung einnehmen kann, durch ein Drehen um die Drehachse mit einem Betätigungswinkel $\alpha$, mit $0° < \alpha < 360°$, in eine zweite Winkelstellung verbracht werden kann, in der der Ventilkörper zumindest eine die Durchlassöffnung freigebende Öffnungsstellung und keine Schließstellung einnehmen kann. Die Lagerung ist derart ausgeführt, dass diese eine durchgehende Drehung des Ventilkörpers gestattet, sodass der Ventilkörper ausgehend von der ersten Winkelstellung durch ein Drehen um die Drehachse mit einem Drehwinkel $\beta_n = \alpha + n \cdot 360°$ für jedes $n \in \mathbb{Z}$ in die zweite Winkelstellung verbracht werden kann.

Entsprechend gilt vorzugsweise, dass der Ventilkörper ausgehend von der zweiten Winkelstellung durch ein Drehen um die Drehachse mit einem Drehwinkel $\beta_n^* = (-\beta_n) = -\alpha - n \cdot 360°$ für jedes $n \in \mathbb{Z}$ ($\mathbb{Z}$ als Menge der ganzen Zahlen) in die erste Winkelstellung verbracht werden kann.

Beim Drehen um die Drehachse gibt ein Vorzeichen des Drehwinkels eine Drehrichtung an. So bedeutet ein positiver Drehwinkel, dass der Ventilkörper gegenüber dem Ventilgehäuse beispielsweise im mathematisch positiven Sinne gedreht wird, wohingegen ein negativer Drehwinkel bedeutet, dass der Ventilkörper gegenüber dem Ventilgehäuse beispielsweise im mathematisch negativen Sinne gedreht wird.

Eine Drehorientierung des Ventilkörpers relativ zum Ventilgehäuse wird über eine Winkelstellung angegeben, die in Bezug auf die Drehachse einen Verdrehwinkel zwischen einem körperfesten Koordinatensystem des Ventilkörpers und einem körperfesten Koordinatensystem des Ventilgehäuses beschreibt. Damit nimmt die Winkelstellung zwangläufig lediglich Werte größer gleich 0° und kleiner 360° an. Die erste und die zweite Winkelstellung sind dabei spezifische Winkelstellungen, in denen sich der auf die Bezugsachse bezogene Verdrehwinkel der beiden Koordinatensysteme durch den Betätigungswinkel α unterscheidet.

Mit dem durch die Erfindung bereitgestellten Wassersportgerät wird ein Wassersportgerät geschaffen, bei dem der Ventilkörper durchgehend und ohne Anschlag gegenüber dem Ventilgehäuse in beide Drehrichtungen kontinuierlich gedreht werden kann und dabei abwechselnd immer wieder die erste Winkelstellung und die zweite Winkelstellung passiert.

Insoweit wird durch diese Ausführung eine Art Überdrehschutz geschaffen, sodass die Ventilvorrichtung nicht durch ein Überdrehen, beispielsweise in Folge einer unachtsamen Betätigung durch den Nutzer, zerstört wird. So kann bei Überdrehen über die erste/zweite Winkelstellung hinaus bei einem Weiterdrehen in die gleiche Drehrichtung wieder die zweite/erste Winkelstellung erreicht werden.

Damit wird ein Sicherheitsmechanismus geschaffen, der eine versehentliche Beschädigung der Ventilvorrichtung, insbesondere durch unerfahrene Nutzer, zuverlässig verhindert.

Eine Öffnungsstellung entspricht einer Relativpositionierung von Ventilkörper und Ventilgehäuse, in der die Durchgangsöffnung geöffnet ist Eine Schließstellung entspricht einer Relativpositionierung von Ventilkörper und Ventilgehäuse, in der die Durchgangsöffnung verschlossen ist.

Der Umstand, dass der Ventilkörper in der zweiten Winkelstellung keine Schließstellung einnehmen kann, bedeutet, dass die Durchlassöffnung bei in zweiter Winkelstellung befindlichem Ventilkörper nicht durch diesen verschlossen werden kann. In anderen Worten kann die Ventilvorrichtung bei in zweiter Winkelstellung befindlichem Ventilkörper nicht verschlossen werden.

Damit entspricht die zweite Winkelstellung vorzugsweise einer Öffnungskonfiguration, in der die Ventilvorrichtung permanent geöffnet ist und nicht geschlossen werden kann, solange sich der Ventilkörper noch in der zweiten Winkelstellung befindet. Eine derartige Konfiguration verringert beispielsweise den Widerstand beim Befüllen der Struktur und erleichtert auch ein Entleeren der selbigen.

Vorzugsweise kann der Ventilkörper in der zweiten Winkelstellung mehrere Öffnungsstellungen einnehmen.

Vorzugsweise kann der Ventilkörper in der ersten Winkelstellung neben der Schließstellung noch ein oder mehrere Öffnungsstellungen einnehmen, sodass die Durchlassöffnung bei in erster Winkelstellung befindlichem Ventilkörper durch diesen geöffnet und auch verschlossen werden kann. In anderen Worten, kann die Ventilvorrichtung bei in erster Winkelstellung befindlichem Ventilkörper geöffnet und verschlossen werden.

Damit kann die Ventilvorrichtung bei in die erste Winkelstellung verbrachtem Ventilkörper insbesondere als Rückschlagventil ausgeführt sein, das eine Strömung der Luft lediglich in eine Richtung, hier in Richtung des Innenraums der Struktur, gestattet.

In der/den Schließstellung(en) steht insbesondere ein Verschlussabschnitt des Ventilkörpers mit dem Ventilgehäuse in Kontakt Vorzugsweise umfasst der Verschlussabschnitt ein zusätzliches Dichtelement, das in der/den Schließstellung(en) mit dem Ventilgehäuse in Kontakt steht.

Das Ventilgehäuse ist vorzugsweise an einer Außenhaut der aufblasbaren Struktur unbeweglich befestigt, derart, dass das Ventilgehäuse diese durchdringt. Vorzugsweise umfasst das Ventilgehäuse ein erstes Gehäuseteil und ein zweites Gehäuseteil, die insbesondere lösbar miteinander verbunden sind, wobei im montierten Zustand das erste und das zweite Gehäuseteil einen Abschnitt der Außenhaut zwischen sich einklemmen. Vorzugsweise umfasst das Ventilgehäuse in einer solchen Schnittstelle zwischen dem ersten und dem zweiten Gehäuseteil ein zusätzliches Dichtungselement

Vorzugsweise ist das zweite Gehäuseteil größtenteils im Innenraum der aufblasbaren Struktur angeordnet und das erste Gehäuseteil ist größtenteils außerhalb des Innenraums angeordnet

Vorzugsweise sind das erste und das zweite Gehäuseteil über eine Gewindepaarung lösbar miteinander verbindbar.

Vorzugsweise sind das Ventilgehäuse und/oder der Ventilkörper aus einem Kunststoff oder einem Verbundwerkstoff hergestellt

Vorzugsweise umfasst der erste Gehäuseteil einen Innenkörper, der einen die Durchlassöffnung bildenden Durchlasskanal für die Luft aufweist. Insbesondere weist der Innenkörper einen auf den Ventilkörper bzw. auf dessen Verschlussabschnitt angepassten Ventilsitz auf.

Vorzugsweise umfasst der erste Gehäuseteil weiter einen auf den zweiten Gehäuseteil angepassten und an diesem befestigbaren Klemmring, über den der Innenkörper und das zweite Gehäuseteil miteinander verspannt werden können. Insbesondere weist im Falle einer Gewindepaarung der Klemmring den Gewindeabschnitt des ersten Gehäuseteils auf.

Vorzugsweise sind der erste und der zweite Gehäuseteil im Wesentlichen ringförmig ausgestaltet.

Die Lagerung kann durch Abschnitte des Ventilgehäuses und/oder des Ventilkörpers selbst gebildet sein. In anderen Worten sind die Ventilgehäuse-seitigen und/oder die Ventilkörper-seitigen Komponenten der Lagerung integral mit dem Ventilgehäuse bzw. mit dem Ventilkörper ausgeführt

Die Lagerung der Ventilvorrichtung kann aber auch zusätzliche Lagerelemente umfassen, die am Ventilgehäuse und/oder am Ventilkörper befestigt sind und die entsprechend der Ventilgehäuse-seitigen und/oder der Ventilkörper-seitigen Komponente der Lagerung entsprechen.

In einer bevorzugten Ausführungsform ist der Ventilkörper über die Lagerung in der ersten und/oder der zweiten Winkelstellung arretiert, derart, dass ein Widerstand gegen ein Drehen des Ventilkörpers aus der ersten und/oder zweiten Winkelstellung heraus größer ist, als ein Widerstand gegen ein Drehen aus einer Zwischenwinkelstellung, die zwischen der ersten und der zweiten Winkelstellung liegt.

Dadurch wird das Risiko eines ungewollten Verstellens minimiert. Zudem kann der Nutzer so leicht erkennen, dass sich der Ventilkörper in der ersten oder zweiten Winkelstellung befindet.

In einer bevorzugten Ausführungsform ist der Ventilkörper über die Lagerung entlang einer Hubachse gegenüber dem Ventilgehäuse verschiebbar.

Dadurch wird ein vergleichsweise einfach umzusetzender Schließmechanismus bereitgestellt, wobei Verschiebungen des Ventilkörpers entlang der Hubachse auch als Hubbewegungen bezeichnet werden.

"Entlang der Hubachse" bedeutet hierbei, dass der Ventilkörper grundsätzlich in positive als auch in negative Richtung der Hubachse verschoben werden kann, vorausgesetzt, dass sich dieser nicht in einer arretierten Position oder in einer Anschlagsposition befindet.

Vorzugsweise verläuft die Hubachse und damit eine Richtung von Hubbewegungen des Ventilkörpers parallel zu einer Hauptströmungsrichtung der Ventilvorrichtung. Vorzugsweise stehen Kontaktflächen des Verschlussabschnitts des Ventilkörpers und des Ventilgehäuse, die in der Schließstellung miteinander in Kontakt stehen, winklig, insbesondere rechtwinklig, zur Hubachse und insbesondere zur Hauptströmungsrichtung.

Besonders bevorzugt liegt der Ventilkörper in seiner Schließstellung zwischen der Kontaktfläche des Ventilgehäuses und dem Innenraum der aufblasbaren Struktur.

Auf diese Weise drückt ein im Innenraum vorliegender pneumatischer Druck gegen den Ventilkörper in Richtung des Kontakts mit dem Ventilgehäuse und erhöht dabei vorzugsweise die vom Ventilkörper über die Kontaktflächen auf das Ventilgehäuse wirkende Kontaktkraft, was wiederum die Abdichtwirkung erhöht. Die Kontaktkraft kann beispielsweise auch als Anpresskraft bezeichnet werden, die der resultierenden Kraft des in der Kontaktfläche wirkenden Anpressdrucks entspricht.

Vorzugsweise ist die Lagerung derart ausgestaltet, dass ein Drehen des Ventilkörpers eine Hubbewegung des Ventilkörpers bewirkt. Dadurch wird der Ventilkörper durch Drehen alleine in unterschiedliche Hubpositionen verbracht, in denen dieser vorzugsweise form- und/oder kraftschlüssig auch arretierbar ist, um eine konstante Hubposition umzusetzen.

In einer bevorzugten Ausführungsform ist ein Ventilhub in der ersten Winkelstellung ungleich einem Ventilhub in der zweiten Winkelstellung, wobei der Ventilhub den möglichen Bewegungsbereich für Hubbewegungen des Ventilkörpers relativ zum Ventilgehäuse entlang der Hubachse beschreibt.

Dadurch kann zumindest für die erste und zweite Winkelstellung des Ventilkörpers ein unterschiedlicher Ventilhub eingestellt werden, worüber sich für diese Winkelstellungen wiederum leicht verschiedene Konfigurationen der Ventilvorrichtung einstellen lassen. So kann beispielsweise eine Öffnungskonfiguration für die zweite Winkelstellung gewählt werden, in der der Ventilhub derart definiert ist, dass der Ventilkörper in der zweiten Winkelstellung durch Hubbewegungen nur zwischen mehreren Öffnungsstellungen bewegt werden kann und die Durchlassöffnung nicht verschlossen werden kann. Weiterhin kann beispielsweise eine Konfiguration als Rückschlagventil für die erste Winkelstellung gewählt werden, in der der Ventilhub derart definiert ist, dass der Ventilkörper in der ersten Winkelstellung durch Hubbewegungen zwischen der Schließstellung und ein oder mehreren Öffnungsstellungen bewegt werden kann.

In einer bevorzugten Ausführungsform definiert die Lagerung zumindest für die erste und für die zweite Winkelstellung des Ventilkörpers, vorzugsweise für jede Winkelstellung des Ventilkörpers, in Bezug auf einen körperfesten Hubreferenzpunkt des Ventilgehäuses, jeweils eine untere Hubendposition und eine obere Hubendposition, die den Ventilhub bestimmen und zwischen denen der Ventilkörper in der jeweiligen Winkelstellung relativ zum Ventilgehäuse entlang der Hubachse verschiebbar ist.

Der Ventilhub für eine bestimmte Winkelstellung wird damit durch die untere und die obere Hubendposition in dieser Winkelstellung festgelegt.

Für eine Winkelstellung kann die untere Hubendposition gleich oder ungleich der oberen Hubendposition sein. Im erstgenannten Fall, in dem obere und untere Hubendposition zusammenfallen, kann der Ventilkörper in dieser Winkelstellung nicht entlang der Hubachse verschoben werden, zumindest nicht, ohne dabei die Winkelstellung des Ventilkörpers zu verändern.

Eine Hubposition des Ventilkörpers beschreibt dabei eine Position des Ventilkörpers relativ zum Hubreferenzpunkt in Richtung der Hubachse und kann für eine bestimmte Winkelstellung zwischen der zugehörigen unteren und oberen Hubendposition liegen.

Vorzugsweise ist zumindest eine untere Hubendposition in der ersten Winkelstellung ungleich einer unteren Hubendposition in der zweiten Winkelstellung und der Ventilkörper nimmt die Schließstellung ein, wenn sich dieser in der unteren Hubendposition in der ersten Winkelstellung befindet, und nimmt die Öffnungsstellung ein, wenn sich dieser in der unteren Hubendposition in der zweiten Winkelstellung befindet.

Vorzugsweise ist für die erste und für die zweite Winkelstellung jeweils die obere Hubendposition ungleich der unteren Hubendposition.

Vorzugsweise entspricht die obere Hubendposition in der ersten Winkelstellung der oberen Hubendposition in der zweiten Winkelstellung. Besonders bevorzugt sind für jede Winkelstellung die oberen Hubendpositionen gleich.

In einer bevorzugten Ausführungsform ist der Ventilhub in der ersten Winkelstellung größer als in der zweiten Winkelstellung.

In einer bevorzugten Ausführungsform weist die Lagerung eine Führungskontur und einen oder mehrere auf diese angepasste Führungsabschnitte auf, die durch Drehen des Ventilkörpers relativ zueinander bewegbar sind, wobei die Führungskontur durch Wechselwirkung mit dem einen oder mehreren Führungsabschnitten für jede Winkelstellung des Ventilkörpers eine untere Hubendposition festlegt

Damit können auf einfache Weise in einer Art Kulissenführung die unteren Hubendpositionen in Abhängigkeit der Winkelstellung des Ventilkörpers festgelegt werden.

In einer bevorzugten Ausführungsform ist die Führungskontur als Teil des Ventilgehäuses ausgeführt und die ein oder mehreren Führungsabschnitte sind als Teil des Ventilkörpers ausgeführt

Alternativ kann die Führungskontur als Teil des Ventilkörpers ausgeführt sein und der Führungsabschnitt als Teil des Ventilgehäuses ausgeführt sein.

Vorzugsweise sind die Führungskontur und die ein oder mehreren Führungsabschnitte integral mit dem Ventilkörper bzw. dem Ventilgehäuse ausgeführt

In einer bevorzugten Ausführungsform ist eine Konturkurve der Führungskontur in einer zur Drehachse orthogonalen Umfangsrichtung eine über einen Winkelbereich von 0° bis 360° stetige Kurve.

Dadurch kann ein stetiger Verlauf der unteren Hubendposition über die Winkelstellungen hinweg bereitgestellt werden, was das Risiko eines Verkeilens oder Festfahren beim Drehen des Ventilkörpers verringert

In einer bevorzugten Ausführungsform umfasst die Ventilvorrichtung ein Rückstellelement, insbesondere in Form einer elastischen Feder, das eine Rückstellkraft auf den Ventilkörper ausübt, durch die der Ventilkörper in der ersten Winkelstellung in der unteren Hubendposition der ersten Winkelstellung verspannt ist

Dadurch wird sichergestellt, dass der Ventilkörper ohne einen ausreichend großen Lufteinlassdruck in seiner Schließstellung verbleibt und die Durchlassöffnung luftdicht abschließt. Wird ein ausreichend großer Lufteinlassdruck angelegt, überwindet die auf den Ventilkörper wirkende Druckkraft die Rückstellkraft und der Ventilkörper wird aus seiner Schließstellung heraus bewegt.

Vorzugsweise ist die Führungskontur derart ausgelegt, dass das Rückstellelement den in einer zwischen der ersten und zweiten Winkelstellung befindlichen Ventilkörper in die erste Winkelstellung zurückverbringt, falls keine Betätigungskraft, beispielsweise durch einen Nutzer, auf den Ventilkörper wirkt. Dadurch kann Sicherheitsfunktion implementiert werden, die den Ventilkörper stets in die Winkelstellung verbringt, in der diese seine Schließstellung einnehmen kann.

In einer bevorzugten Ausführungsform entspricht eine Richtung der Hubachse einer Richtung der Drehachse.

Dadurch wird eine einfach umzusetzende Kinematik für die Ventilvorrichtung, insbesondere im Hinblick auf die Ausgestaltung der Lagerung, ermöglicht

In einer bevorzugten Ausführungsform ist die Lagerung derart ausgeführt, dass der Ventilkörper ausgehend von einer dritten Winkelstellung, die weder der ersten noch der zweiten Winkelstellung entspricht und in der der Ventilkörper eine die Durchlassöffnung verschließende weitere Schließstellung einnehmen kann, durch ein Drehen um die Drehachse mit einem Betätigungswinkel $\gamma$, mit $0 < \gamma < 360°$, in eine vierte Winkelstellung, die weder der ersten noch der zweiten Winkelstellung entspricht, verbracht werden kann, in der der Ventilkörper eine die Durchlassöffnung freigebende weitere Öffnungsstellung und keine Schließstellung einnehmen kann, wobei durch die die durchgehende Drehung gestattende Lagerung der Ventilkörper ausgehend von der dritten Winkelstellung durch ein Drehen um die Drehachse mit einem Drehwinkel $\delta_n = \gamma + n \cdot 360°$ für jedes $n \in \mathbb{Z}$ in die vierte Winkelstellung verbracht werden kann.

Entsprechend gilt vorzugsweise, dass der Ventilkörper ausgehend von der vierten Winkelstellung durch ein Drehen um die Drehachse mit einem Drehwinkel $\delta_n^* = (-\delta_n) = -\gamma - n \cdot 360°$ für jedes $n \in \mathbb{Z}$ in die erste Winkelstellung verbracht werden kann.

Damit wird die Anzahl verschiedener Winkelstellungen erhöht, sodass eine erforderliche Drehung zum Wechsel der Winkelstellung kleiner ausgeführt werden.

Die Ventilvorrichtung kann für die dritte und vierte Winkelstellung analog gemäß jeder der vorstehend beschriebenen Ausführungen in Bezug auf die erste und die zweite Winkelstellung ausgeführt sein, wobei die Ausführungen zur ersten Winkelstellung analog auch für die dritte Winkelstellung gewählt werden können und die Ausführungen zur zweiten Winkelstellung analog auch für die vierte Winkelstellung gewählt werden können.

Insbesondere kann der Ventilkörper in der dritten Winkelstellung neben der weiteren Schließstellung noch ein oder mehrere weitere Öffnungsstellungen einnehmen, sodass die Durchlassöffnung bei in dritter Winkelstellung befindlichem Ventilkörper durch diesen geöffnet und auch verschlossen werden kann. In anderen Worten, kann die Ventilvorrichtung bei in dritter Winkelstellung befindlichem Ventilkörper geöffnet und verschlossen werden.

Insbesondere kann der Ventilkörper in der vierten Winkelstellung mehrere weitere Öffnungsstellungen einnehmen und kann in dieser vierten Winkelstellung keine Schließstellung einnehmen, sodass die Durchlassöffnung bei in vierter Winkelstellung befindlichem Ventilkörper nicht durch diesen verschlossen werden kann. In anderen Worten kann die Ventilvorrichtung bei in vierter Winkelstellung befindlichem Ventilkörper nicht verschlossen werden.

In einer bevorzugten Ausführungsform ist die Lagerung derart ausgeführt, dass der Ventilkörper ausgehend von der zweiten Winkelstellung durch ein Drehen um die Drehachse mit einem Betätigungswinkel $\theta$, mit $0° < \theta < 360°$, in die dritte Winkelstellung verbracht werden kann und $\alpha + \gamma + \theta < 360°$ gilt, wobei vorzugsweise $80° \leq \alpha \leq 100°$ und/oder $80° \leq \delta \leq 100°$ und/oder $80° \leq \theta \leq 100°$ gilt.

In einer bevorzugten Ausführungsform ist die Lagerung derart ausgeführt, dass der Ventilkörper ausgehend von der dritten Winkelstellung durch ein Drehen um die Drehachse mit einem Betätigungswinkel $\phi$, mit $0° < \phi < 360°$, in die erste Winkelstellung verbracht werden kann und vorzugsweise $\alpha + \gamma + \theta + \phi = 360°$ gilt.

Dadurch sind nur kurze Drehbewegungen zum Wechsel zwischen den Winkelstellungen erforderlich, bei gleichmäßiger Ausführung vorzugsweise jeweils 90°-Drehbewegungen.

In einer bevorzugten Ausführungsform umfasst der Ventilkörper einen auf die Durchlassöffnung angepassten Verschlussabschnitt, einen Bedienabschnitt, über den der Ventilkörper gedreht werden kann, und einen dazwischen angeordneten Verbindungsabschnitt, wobei die Lagerung insbesondere im Bereich des Verbindungsabschnitts angreift.

Dadurch wird ein einfacher Aufbau mit mehreren Abschnitten bereitgestellt, wobei jeder Abschnitt eine separate Hauptfunktion inne hat

In einer bevorzugten Ausführungsform weist das Ventilgehäuse einen Befestigungsabschnitt auf, der auf einen Anschlussadapter, der zum Einsatz mit einer Pumpenvorrichtung eingerichtet ist, angepasst ist, derart, dass der Anschlussadapter durch ein Einführen und ein Drehen gegenüber dem Ventilgehäuse mit dem Befestigungsabschnitt in Wechselwirkung gebracht werden kann, um den Anschlussadapter lösbar am Ventilgehäuse zu befestigen, und der befestigte Anschlussadapter durch ein Drehen und ein Herausziehen aus dem Ventilgehäuse vom Befestigungsabschnitt getrennt werden kann, um den befestigten Anschlussadapter vom Ventilgehäuse zu lösen.

Dadurch kann auf einfache Weise eine Verbindung zwischen einer Pumpenvorrichtung und der Ventilvorrichtung hergestellt werden.

In einer bevorzugten Ausführungsform ist der Bedienabschnitt des Ventilkörpers auf einen Betätigungsabschnitt des Anschlussadapters derart angepasst, dass durch das Einführen und Drehen des Anschlussadapters zum Herstellen der lösbaren Befestigung des Anschlussadapters am Ventilgehäuse der Betätigungsabschnitt über Wechselwirkung mit dem Bedienabschnitt den Ventilkörper ausgehend von einer Winkelstellung, die nicht die erste Winkelstellung ist, in die erste Winkelstellung dreht.

Alternativ oder zusätzlich kann der Bedienabschnitt des Ventilkörpers auf den Betätigungsabschnitt des Anschlussadapters derart angepasst sein, dass durch das Drehen des befestigten Anschlussadapters zum Lösen der Befestigung des Anschlussadapters am Ventilgehäuse der Betätigungsabschnitt über Wechselwirkung mit dem Bedienabschnitt den Ventilkörper ausgehend von einer Winkelstellung, die nicht die erste Winkelstellung ist, in die erste Winkelstellung dreht.

Auf diese Weise kann eine Winkelstellung des Ventilkörpers ohne direkte Bedienung des Bedienabschnitts geändert werden, insbesondere im Zuge einer ohnehin beim Aufblasen erforderlichen Handlung, namentlich dem Verbinden und/oder Trennen der Ventilvorrichtung mit/vom Anschlussadapter.

Dadurch wird sichergestellt, dass sich der Ventilkörper beim Lösen des Anschlussadapters in der ersten Winkelstellung befindet, in der dieser seine Schließstellung einnehmen kann, um ein ungewolltes Austreten der Luft aus der Struktur zu verhindern.

Ferner eignet sich die Ventilvorrichtung besonders vorteilhaft zum Einsatz mit einem solchen Anschlussadapter, da hier ein versehentliches Überdrehen des Ventilkörpers beim Eindrehen des Anschlussadapters nicht zur Zerstörung der Ventilvorrichtung führt. Ein Risiko des ungewollten Überdrehens ist im Vergleich zur Nutzung ohne Anschlussadapter wesentlich höher, da der Nutzer gerade bei eingesetzten Anschlussadapter visuell nicht erfassen kann, in welcher Stellung sich der Ventilkörper gerade befindet.

In einer bevorzugten Ausführungsform ist der Bedienabschnitt des Ventilkörpers auf den Betätigungsabschnitt des Anschlussadapters derart angepasst, dass durch das Einführen und Drehen des Anschlussadapters zum Herstellen der lösbaren Befestigung des Anschlussadapters am Ventilgehäuse der Betätigungsabschnitt über Wechselwirkung mit dem Bedienabschnitt den Ventilkörper aus seiner unteren Hubendposition heraus verschiebt

Dadurch kann der Ventilkörper in jedem Fall aus seiner Schließstellung herausbewegt werden, um die Durchlassöffnung freizugeben, was beispielsweise ein Widerstand beim Aufblasen durch die Pumpenvorrichtung verringert, die andernfalls zusätzlich auch die Vorspannung des Rückstellelements beim Aufblasen überwinden müsste.

In einer bevorzugten Ausführungsform ist das Wassersportgerät ein Surfsportgerät, insbesondere ein Flügelrigg oder ein Kite, und die aufblasbare Struktur vorzugsweise eine aufblasbare Fronttube des Kites oder des Flügelriggs oder eine aufblasbare Mittel- oder Quertube des Kites oder des Flügelriggs ist

Weiter kann es sich bei dem Wassersportgerät aber auch um ein aufblasbares Board handeln, beispielsweise ein aufblasbares Surfboards oder ein sog. Stand-Up-Paddle-Board. Weiterhin kann das Wassersportgerät auch ein jeweils aufblasbares Kanu, Kajak, Schlauboot, Raftingboot oder Wingboard sein.

Die robustere Ventilvorrichtung eignet sich insbesondere für den Einsatz mit solchen Surfsportgeräten, die in der Regel extremen Umgebungsverhältnissen ausgesetzt sind, beispielsweise in Form der Druckbelastung im aufgeblasenen Zustand, UV-Strahlung, Wärme, Kälte oder Salzwasser, die das Material der Ventilvorrichtung vergleichsweise schnell ermüden und dieses so anfälliger für Beschädigungen, insbesondere bei unachtsamer Bedienung machen. So verzeiht die Ventilvorrichtung mit dem vorstehend beschriebenen Überdrehschutz beispielsweise ein ungewolltes Überdrehen.

Der Begriff "Tube" ist Fachbegriff des technischen Gebiets und bezeichnet im Wesentlichen schlauch- oder röhrenartig ausgebildete Strukturen, die insbesondere durch ein Aufblasen versteifen.

Die "Fronttube" ist ebenfalls Fachbegriff des technischen Gebiets und bezeichnet eine am Surfsportgerät vorderseitig angeordnete Tube, die als Anströmkante für den Wind dient.

Gemäß einem zweiten Aspekt der Erfindung wird eine Ventilvorrichtung zum Einsatz an einem Wassersportgerät, insbesondere eine Ventilvorrichtung eines Wassersportgeräts gemäß dem ersten Aspekt oder einer von dessen bevorzugten Ausführungen, bereitgestellt. Die Ventilvorrichtung umfasst ein Ventilgehäuse mit einer Durchlassöffnung und einen über eine Lagerung beweglich am Ventilgehäuse angebrachten Ventilkörper zum luftdichten Verschließen der Durchlassöffnung, wobei der Ventilkörper über die Lagerung um eine Drehachse gegenüber dem Ventilgehäuse drehbar ist, derart, dass der Ventilkörper ausgehend von einer ersten Winkelstellung, in der der Ventilkörper eine die Durchlassöffnung verschließende Schließstellung einnehmen kann, durch ein Drehen um die Drehachse mit einem Betätigungswinkel β, mit $0° < β \leq 180°$, in eine zweite Winkelstellung verbracht werden kann, in der der Ventilkörper eine die Durchlassöffnung freigebenden Öffnungsstellung und keine Schließstellung einnehmen kann, und die Lagerung derart ausgeführt ist, dass diese eine durchgehende Drehung des Ventilkörpers gestattet, sodass der Ventilkörper ausgehend von der ersten Winkelstellung durch ein Drehen um die Drehachse mit einem Drehwinkel $α_n = β + n \cdot 360°$ für jedes $n \in \mathbb{Z}$ in die zweite Winkelstellung verbracht werden kann.

Damit wird eine Ventilvorrichtung bereitgestellt, die beispielsweise zum Nachrüsten eines Wassersportgeräts genutzt werden kann. Die bereitgestellte Ventilvorrichtung entspricht im Wesentlichen der Ventilvorrichtung des Wassersportgeräts gemäß dem ersten Aspekt und zeichnet sich ebenso durch alle durch diese erreichten Vorteile aus.

Die Ventilvorrichtung kann gemäß jeder der im Kontext des Wassersportgeräts beschriebenen Ausführungen ausgestaltet sein. Auf eine erneute Wiedergabe der einzelnen Ausführungen wird an dieser Stelle verzichtet.

Gemäß einem dritten Aspekt der Erfindung wird ein Ventilsystem zum Einsatz an einem Wassersportgerät, insbesondere eines Wassersportgeräts gemäß dem ersten Aspekt oder einer von dessen bevorzugten Ausführungen, bereitgestellt. Das Ventilsystem umfasst einen Anschlussadapter, der mit einem Auslass einer Pumpenvorrichtung verbindbar ist, und eine Ventilvorrichtung zumindest gemäß dem zweiten Aspekt der Erfindung, wobei der Anschlussadapter auf einen Befestigungsabschnitt des Ventilgehäuses der Ventilvorrichtung angepasst ist, derart, dass der Anschlussadapter durch ein Einführen und ein Drehen gegenüber dem Ventilgehäuse mit dem Befestigungsabschnitt in Wechselwirkung gebracht werden kann, um den Anschlussadapter lösbar am Ventilgehäuse zu befestigen, und der befestigte Anschlussadapter durch ein Drehen und ein Herausziehen aus dem Ventilgehäuse vom Befestigungsabschnitt getrennt werden kann, um den befestigten Anschlussadapter vom Ventilgehäuse zu lösen, und der Anschlussadapter einen Betätigungsabschnitt aufweist, der auf einen Bedienabschnitt des Ventilkörpers der Ventilvorrichtung angepasst ist, derart, dass durch das Einführen und Drehen des Anschlussadapters zum Herstellen der lösbaren Befestigung des Anschlussadapters am Ventilgehäuse der Betätigungsabschnitt über Wechselwirkung mit dem Bedienabschnitt den Ventilkörper ausgehend von einer Winkelstellung, die nicht die erste Winkelstellung ist, in die erste Winkelstellung dreht, und/oder der Bedienabschnitt des Ventilkörpers auf den Betätigungsabschnitt des Anschlussadapters derart angepasst ist, dass durch das Drehen des befestigten Anschlussadapters zum Lösen der Befestigung des Anschlussadapters am Ventilgehäuse der Betätigungsabschnitt über Wechselwirkung mit dem Bedienabschnitt den Ventilkörper ausgehend von einer Winkelstellung, die nicht die erste Winkelstellung ist, in die erste Winkelstellung dreht.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.

Fig. 1A bis 1D zeigen verschiedene Ansichten eines Ausführungsbeispiels der erfindungsgemäßen Ventilvorrichtung oder von Komponenten der Ventilvorrichtung.

Fig. 2A und 2B zeigen perspektivische Ansichten von Komponenten eines Ausführungsbeispiels der erfindungsgemäßen Ventilvorrichtung. Fig. 2C zeigt hierzu eine beispielhafte Konturkurve einer Führungskontur der Komponente aus Fig. 2B.

Fig. 3 zeigt eine perspektivische Ansicht eines Ausführungsbeispiels des erfindungsgemäßen Wassersportgeräts, hier in Form eines Flügelriggs.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

**Ausführliche Figurenbeschreibung**

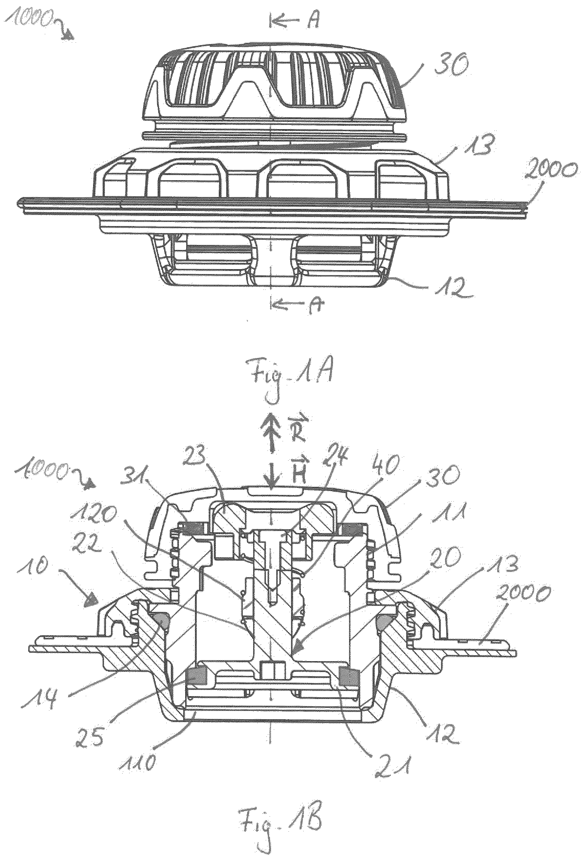

Fig. 1A bis 1D zeigen verschiedene Ansichten eines Ausführungsbeispiels der erfindungsgemäßen Ventilvorrichtung 1000 oder von Komponenten der Ventilvorrichtung 1000.

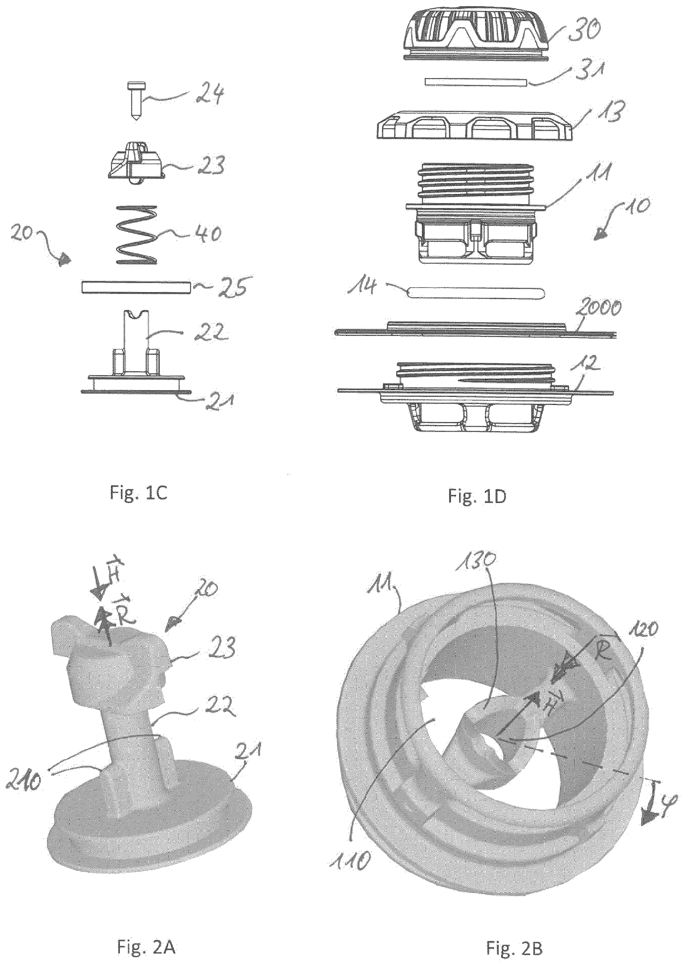

Fig. 1A zeigt hierzu eine Seitenansicht, Fig. 1B einen Querschnitt durch die in Fig. 1A eingezeichnete Schnittebene A-A, Fig. 1C zeigt eine Explosionsdarstellung einer Ventilkörperbaugruppe und Fig. 1D zeigt eine Explosionsdarstellung einer Ventilgehäusebaugruppe.

Nachfolgend werden die Fig. 1A bis 1D gemeinsam beschrieben.

Die Ventilvorrichtung 1000 umfasst ein Ventilgehäuse 10 mit einer Durchlassöffnung 110 und einen über eine Lagerung beweglich am Ventilgehäuse 10 angebrachten Ventilkörper 20 zum luftdichten Verschließen der Durchlassöffnung 110.

Der Ventilkörper 20 ist über die Lagerung um eine Drehachse $\vec{R}$ gegenüber dem Ventilgehäuse 10 drehbar, wobei die Lagerung derart ausgeführt ist, dass der Ventilkörper 20 ausgehend von einer ersten Winkelstellung, in der der Ventilkörper 20 zumindest eine Durchlassöffnung 110 verschließende Schließstellung einnehmen kann, durch ein Drehen um die Drehachse $\vec{R}$ mit einem vordefinierten Betätigungswinkel $\alpha$, mit $0° < \alpha < 360°$, in eine zweite Winkelstellung verbracht werden kann, in der der Ventilkörper 20 zumindest eine die Durchlassöffnung 110 freigebende Öffnungsstellung und keine Schließstellung einnehmen kann.

Die Lagerung ist derart ausgeführt, dass diese eine durchgehende Drehung des Ventilkörpers 20 gestattet, sodass der Ventilkörper 20 ausgehend von der ersten Winkelstellung durch ein Drehen um die Drehachse $\vec{R}$ mit einem Drehwinkel $\beta_n = \alpha + n \cdot 360°$ für jedes $n \in \mathbb{Z}$ in die zweite Winkelstellung verbracht werden kann.

Fig. 1A und 1B zeigen dabei eine Konfiguration der Ventilvorrichtung mit in der ersten Winkelstellung befindlichem Ventilkörper 20, der sich in der Schließstellung befindet.

Der Ventilkörper 20 umfasst einen auf die Durchlassöffnung 110 angepassten Verschlussabschnitt 21, einen Bedienabschnitt 23, über den der Ventilkörper 20 gedreht werden kann, und einen dazwischen angeordneten Verbindungsabschnitt 22, die entweder integral, teilintegral oder separat ausgeführt sein können. Im vorliegenden Ausführungsbeispiel sind der Verbindungsabschnitt 22 und der Verschlussabschnitt 21 integral ausgeführt und der separate Bedienabschnitt 23 ist über eine Schraube 24 am Verbindungsabschnitt 22 befestigt.

Weiterhin umfasst der Ventilkörper vorzugsweise eine Ventilkörperdichtung 25 im Bereich des Verschlussabschnitts 21.

Das Ventilgehäuse 10 umfasst beispielsweise ein erstes Gehäuseteil und ein zweites Gehäuseteil, die lösbar miteinander verbunden sind, wobei im montierten Zustand das erste und das zweite Gehäuseteil einen Abschnitt 2000 der Außenhaut (hier in Form eines Verstärkungsabschnitts dargestellt) zwischen sich einklemmen. Vorzugsweise umfasst das Ventilgehäuse 10 in einer solchen Schnittstelle zwischen dem ersten und dem zweiten Gehäuseteil eine zusätzliche Dichtung 14.

In einem an der aufblasbaren Struktur montierten Zustand ist das zweite Gehäuseteil größtenteils im Innenraum der aufblasbaren Struktur angeordnet und das erste Gehäuseteil ist größtenteils außerhalb des Innenraums angeordnet.

Der zweite Gehäuseteil umfasst vorzugsweise einen Montagekörper 12 und der erste Gehäuseteil umfasst vorzugsweise einen Innenkörper 11 und einen Klemmring 13, wobei der Klemmring am Montagekörper 12 befestigbar ist, um das erste Gehäuseteil mit dem zweiten Gehäuseteil zu verspannen und dabei insbesondere den Abschnitt 2000 der Außenhaut zwischen sich einzuklemmen. Vorliegend erfolgt die Befestigung des Klemmrings über eine beispielhafte Gewindepaarung.

Weiterhin weist die Ventilvorrichtung 1000 zum Schutz des Innenlebens vorzugsweise noch einen Ventildeckel 30 mit einer Deckeldichtung 31 auf, wobei der Deckel am Ventilgehäuse 10 befestigt werden kann.

Der Innenkörper 11 weist vorzugsweise die Durchlassöffnung 110 und einen Lagerungsabschnitt 120 auf, der Teil der Lagerung des Ventilkörpers 20 ist und im montierten Zustand am Verbindungsabschnitt 22 des Ventilkörpers 20 angreift.

Der Ventilkörper 20 ist über die Lagerung entlang einer Hubachse $\vec{H}$ gegenüber dem Ventilgehäuse 10 verschiebbar, wobei ein möglicher Ventilhub entlang der Hubachse $\vec{H}$ von einer Winkelstellung des Ventilkörpers 20 abhängt.

So definiert die Lagerung zumindest für die erste und für die zweite Winkelstellung des Ventilkörpers 20, vorzugsweise für jede Winkelstellung des Ventilkörpers 20, in Bezug auf einen körperfesten Hubreferenzpunkt des Ventilgehäuses 10, jeweils eine untere Hubendposition und eine obere Hubendposition, zwischen denen der Ventilkörper 20 in der jeweiligen Winkelstellung relativ zum Ventilgehäuse 10 entlang der Hubachse $\vec{H}$ verschiebbar ist.

Der Ventilkörper 20 nimmt die Schließstellung ein, wenn sich in der unteren Hubendposition in der ersten Winkelstellung befindet, so wie dies beispielsweise in Fig. 1B dargestellt ist. Ausgehend von der unteren Hubendposition gestattet die Lagerung nun eine Hubbewegung in positiver Richtung der Hubachse $\vec{H}$, über die der Ventilkörper 20 aus der Schließstellung heraus verschoben wird, um so die Durchlassöffnung 110 freizugeben. Auf diese Weise fungiert die Ventilvorrichtung 1000 gemäß des Ausführungsbeispiels in der ersten Winkelstellung als eine Art Rückschlagventil.

Die Ventilvorrichtung 1000 weist hierzu vorzugsweise ein Rückstellelement 40 als Teil der Lagerung, insbesondere in Form einer elastischen Feder, das eine Rückstellkraft auf den Ventilkörper 20 ausübt, durch die der Ventilkörper 20 in der ersten Winkelstellung in der unteren Hubendposition der ersten Winkelstellung verspannt ist. Im gezeigten Ausführungsbeispiel ist die auf den Ventilkörper wirkende Rückstellkraft in negative Richtung der Hubachse $\vec{H}$ gerichtet.

Vorzugsweise ist die Lagerung derart ausgelegt, dass das Rückstellelement 40 den in einer zwischen der ersten und zweiten Winkelstellung befindlichen Ventilkörper 20 in die erste Winkelstellung zurückverbringt, falls keine Betätigungskraft, beispielsweise durch einen Nutzer, auf den Ventilkörper 20 wirkt.

Der Ventilkörper 20 nimmt die Öffnungsstellung ein, wenn sich dieser in der unteren Hubendposition in der zweiten Winkelstellung befindet, die bezogen auf die positive Richtung der Hubachse $\vec{H}$ vorzugsweise oberhalb der unteren Hubendposition der ersten Winkelstellung liegt.

Ausgehend von der unteren Hubendposition der zweiten Winkelstellung gestattet die Lagerung nun eine Hubbewegung in positiver Richtung der Hubachse $\vec{H}$, über die der Ventilkörper 20 nicht in eine Schließstellung verschoben werden kann. Auf diese Weise fungiert die Ventilvorrichtung 1000 gemäß des Ausführungsbeispiels in der zweiten Winkelstellung als eine Art permanent geöffnetes Ventil.

Durch Drehen des Ventilkörpers 20 kann dieser von der ersten in die zweite Winkelstellung verbracht werden (und umgekehrt), um so zwischen den beiden vorstehenden Konfigurationen (permanent geöffnet, Rückschlagventil) umzuschalten.

Die Lagerung, die die durchgehende Drehung ermöglicht, stellt schafft dabei eine Art Überdrehschutz, sodass die Ventilvorrichtung 1000 nicht durch ein Überdrehen des Ventilkörpers, beispielsweise in Folge einer unachtsamen Betätigung durch den Nutzer, zerstört wird. So kann bei Überdrehen des Ventilkörpers 20 über die erste/zweite Winkelstellung hinaus bei einem Weiterdrehen in die gleiche Drehrichtung wieder die zweite/erste Winkelstellung erreicht werden, ohne dabei die Ventilvorrichtung 1000 zu beschädigen.

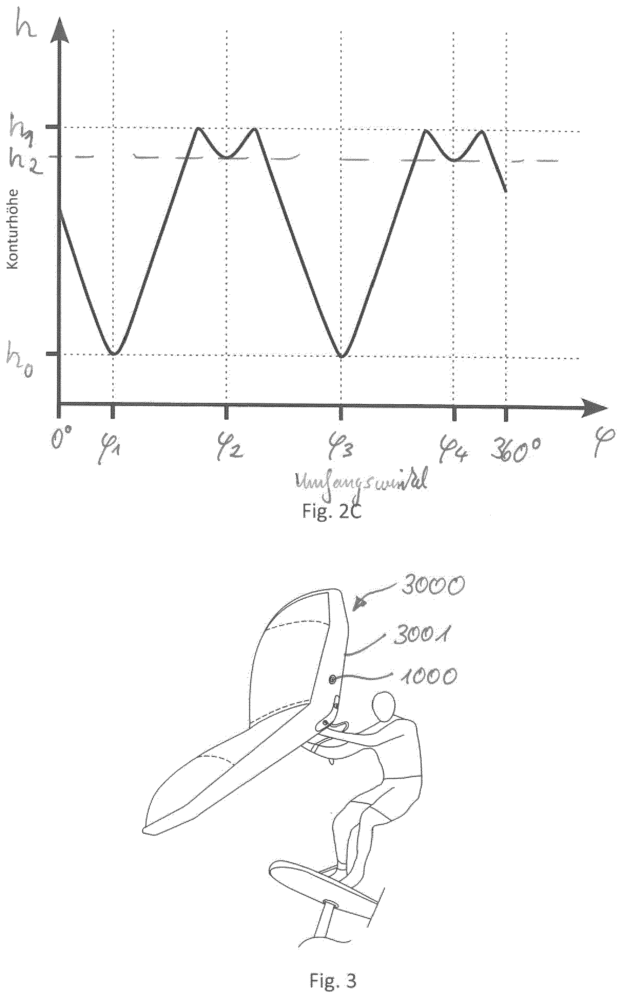

Fig. 2A und 2B zeigen perspektivische Ansichten von Komponenten eines Ausführungsbeispiels der erfindungsgemäßen Ventilvorrichtung. Fig. 2C zeigt hierzu eine beispielhafte Konturkurve einer Führungskontur 130 der Komponente aus Fig. 2B.

Fig. 2A zeigt hierzu einen Ventilkörper 20 und Fig. 2B einen Innenkörper 11 eines Ventilgehäuses des Ausführungsbeispiels der erfindungsgemäßen Ventilvorrichtung, die getrennt voneinander dargestellt sind. In einem montierten Zustand der Ventilvorrichtung, wäre der Ventilkörper 20 in einen Lagerungsabschnitt 120 des Innenkörpers 11 eingefügt (siehe hierzu auch Fig. 1B).

Die Ventilvorrichtung umfasst zumindest ein Ventilgehäuse mit einer Durchlassöffnung 110 und einen über eine Lagerung beweglich am Ventilgehäuse bzw. am Innenkörper 11 angebrachten Ventilkörper 20 zum luftdichten Verschließen der Durchlassöffnung 110. Der Ventilkörper 20 ist über die Lagerung um eine Drehachse $\vec{R}$ gegenüber dem Ventilgehäuse bzw. gegenüber dem Innenkörper 11 drehbar, wobei die Lagerung derart ausgeführt ist, dass der Ventilkörper 20 ausgehend von einer ersten Winkelstellung, in der der Ventilkörper 20 eine die Durchlassöffnung verschließende Schließstellung einnehmen kann, durch ein Drehen um die Drehachse $\vec{R}$ mit einem Betätigungswinkel $\alpha$, mit $0° < \alpha < 360°$, in eine zweite Winkelstellung $\varphi_2$ verbracht werden kann, in der der Ventilkörper 20 eine die Durchlassöffnung 110 freigebenden Öffnungsstellung und keine Schließstellung einnehmen kann. Die Lagerung ist derart ausgeführt, dass diese eine durchgehende Drehung des Ventilkörpers 20 gestattet, sodass der Ventilkörper 20 ausgehend von der ersten Winkelstellung durch ein Drehen um die Drehachse $\vec{R}$ mit einem Drehwinkel $\beta_n = \alpha + n \cdot 360°$ für jedes $n \in \mathbb{Z}$ in die zweite Winkelstellung verbracht werden kann.

Der Ventilkörper 20 ist über die Lagerung entlang einer Hubachse $\vec{H}$ gegenüber dem Ventilgehäuse 10 verschiebbar, wobei ein möglicher Ventilhub entlang der Hubachse $\vec{H}$ von einer Winkelstellung des Ventilkörpers 20 abhängt.

So definiert die Lagerung zumindest für die erste und für die zweite Winkelstellung des Ventilkörpers 20, vorzugsweise für jede Winkelstellung des Ventilkörpers 20, in Bezug auf einen körperfesten Hubreferenzpunkt des Ventilgehäuses 10, jeweils eine untere Hubendposition und eine obere Hubendposition, zwischen denen der Ventilkörper 20 in der jeweiligen Winkelstellung relativ zum Ventilgehäuse 10 entlang der Hubachse $\vec{H}$ verschiebbar ist

Der Ventilkörper 20 nimmt die Schließstellung ein, wenn sich in der unteren Hubendposition in der ersten Winkelstellung befindet. Der Ventilkörper 20 nimmt die Öffnungsstellung ein, wenn sich dieser in der unteren Hubendposition in der zweiten Winkelstellung befindet, die bezogen auf die positive Richtung der Hubachse $\vec{H}$ vorzugsweise oberhalb der unteren Hubendposition der ersten Winkelstellung liegt.

Die Lagerung weist zur Definition der unteren Hubendpositionen in den jeweiligen Winkelstellungen eine Führungskontur 130 und einen oder mehrere auf diese angepasste Führungsabschnitte 210 auf. Vorliegend ist die Führungskontur 130 als Teil des Innenkörpers 11 ausgeführt und der Ventilkörper weist hier beispielhaft zwei darauf angepasste Führungsabschnitte 210 auf, die durch Drehen des Ventilkörpers 20 relativ zur Führungskontur 130 bewegbar sind.

Die Führungskontur 130 definiert dabei in Wechselwirkung mit den einen oder mehreren Führungsabschnitten 210 für jede Winkelstellung des Ventilkörpers 20 eine untere Hubendposition.

Wie der Zusammenschau der Fig. 2A und 2B entnommen werden kann, können die Führungsabschnitte 210 durch Drehen des Ventilkörpers im montierten Zustand entlang der Führungskontur 130 bewegt werden, wobei ein Kontaktpunkt zwischen diesen in Bezug auf eine Position in Richtung der Hubachse $\vec{H}$ mit Drehung des Ventilkörpers 20 variiert und damit untere Hubendpositionen definiert.

Hierzu variiert beispielsweise eine Konturhöhe der Führungskontur 130 über einem körperfesten Hubreferenzpunkt des Innenkörpers 11 in Bezug auf die Richtung der Hubachse $\vec{H}$ über einen Umfangswinkel $\varphi$ des Innenkörpers 11.

Fig. 2C zeigt hierzu eine beispielhafte Konturkurve einer Führungskontur 130 der Komponente aus Fig. 2B, in der eine Konturhöhe h der Führungskontur über einem körperfesten Hubreferenzpunkt des Innenkörpers 11 in Bezug auf die Richtung der Hubachse $\vec{H}$ über einen Umfangswinkel $\varphi$ des Innenkörpers 11 hinweg aufgetragen ist

Die Konturhöhe bewegt sich beispielhaft zwischen den Höhenwerten $h_0$ und $h_1$ und definiert untere Hubendpositionen des Ventilkörpers 20 für dessen Hubbewegungen.

Befindet sich beispielsweise ein erster der Führungsabschnitte 210 in Bezug auf den Innenkörper 11 in einer Position $\varphi = \varphi_1$, so beträgt für diese Winkelstellung ein minimal erreichbarer Abstand eines Kontaktpunkts des Führungsabschnitts 210 zum Hubreferenzpunkt dem Wert $h_0$.

Diese Stellung würde dabei insbesondere der ersten Winkelstellung des Ventilkörpers 20 entsprechen.

Befindet sich beispielsweise der erste Führungsabschnitt 210 in Bezug auf den Innenkörper 11 in einer Position $\varphi = \varphi_2$, so beträgt für diese Winkelstellung ein minimal erreichbarer Abstand eines Kontaktpunkts des Führungsabschnitts 210 zum Hubreferenzpunkt dem Wert $h_2$.

Diese Stellung würde dabei insbesondere der zweiten Winkelstellung des Ventilkörpers 20 entsprechen, in der aufgrund des beschriebenen Mindestabstands $h_2$, der Ventilkörper bzw. dessen Verschlussabschnitt 21 keine Schließstellung zum Verschließen der Durchlassöffnung einnehmen kann.

In einem Bereich um die Winkelpositionen $\varphi =$ $\varphi_2$ und $\varphi = \varphi_4$ weist die Konturkurve Abschnitte auf, deren Konturhöhe größer ausfällt als der Wert $h_2$, wodurch dort ein lokales Minimum der Konturhöhe geschaffen wird, dass im montierten Zustand eine Arretierungsfunktion erfüllt. So wird ein Verdrehen des Ventilkörpers dadurch erschwert, dass der erste Führungsabschnitt 210 zum Drehen des Ventilkörpers 20 zunächst die lokalen Maxima auf Höhe $h_1$ um die Winkelpositionen $\varphi = \varphi_2$ und $\varphi = \varphi_4$ überwinden muss.

Die Konturkurve ist vorzugsweise eine über den Winkelbereich stetige Kurve und insbesondere ist diese eine stetig differenzierbare Kurve. Im vorliegenden Fall ist die Konturkurve aufgrund der zwei um 180° versetzten Führungsabschnitte 210 insbesondere eine $\pi$ - periodische Kurve.

Vorzugsweise ist die Lagerung derart ausgeführt ist, dass der Ventilkörper 20 ausgehend von einer dritten Winkelstellung, die weder der ersten noch der zweiten Winkelstellung entspricht und in der der Ventilkörper 20 eine die Durchlassöffnung 110 verschließende weitere Schließstellung einnehmen kann, durch ein Drehen um die Drehachse mit einem Betätigungswinkel $\gamma$, mit $0° < \gamma < 360°$, in eine vierte Winkelstellung, die weder der ersten noch der zweiten Winkelstellung entspricht, verbracht werden kann, in der der Ventilkörper 20 eine die Durchlassöffnung 110 freigebende weitere Öffnungsstellung und keine Schließstellung einnehmen kann, wobei durch die die durchgehende Drehung gestattende Lagerung der Ventilkörper 20 ausgehend von der dritten Winkelstellung durch ein Drehen um die Drehachse mit einem Drehwinkel $\delta_n = \gamma + n \cdot 360°$ für jedes $n \in Z$ in die vierte Winkelstellung verbracht werden kann.

Besagte dritte Winkelstellung würde dabei eingenommen werden, wenn sich der erste Führungsabschnitt 210 in Bezug auf den Innenkörper 11 in einer Position $\varphi = \varphi_3$ befinden würde und besagte vierte Winkelstellung würde dabei eingenommen werden, wenn sich der erste Führungsabschnitt 210 in Bezug auf den Innenkörper 11 in einer Position $\varphi = \varphi_4$ befinden würde.

Fig. 3 zeigt eine perspektivische Ansicht eines Ausführungsbeispiels des erfindungsgemäßen Wassersportgeräts, hier in Form eines Flügelriggs 3000.

Das Flügelrigg 3000 umfasst zumindest eine aufblasbare Struktur in Form einer Fronttube 3001 mit einer Ventilvorrichtung 1000, über die einem Innenraum der Fronttube 3001 Luft zugeführt werden kann.

Die Ventilvorrichtung 1000 kann beispielsweise in Form des Ausführungsbeispiels aus Fig. 1A bis 1D ausgeführt sein, kann aber auch davon abweichen.

Die Ventilvorrichtung 1000 umfasst zumindest ein Ventilgehäuse mit einer Durchlassöffnung und einen über eine Lagerung beweglich am Ventilgehäuse angebrachten Ventilkörper zum luftdichten Verschließen der Durchlassöffnung. Der Ventilkörper ist über die Lagerung um eine Drehachse gegenüber dem Ventilgehäuse drehbar, wobei die Lagerung derart ausgeführt ist, dass der Ventilkörper ausgehend von einer ersten Winkelstellung, in der der Ventilkörper eine die Durchlassöffnung verschließende Schließstellung einnehmen kann, durch ein Drehen um die Drehachse mit einem Betätigungswinkel $\alpha$, mit $0° < \alpha < 360°$, in eine zweite Winkelstellung verbracht werden kann, in der der Ventilkörper eine die Durchlassöffnung freigebenden Öffnungsstellung und keine Schließstellung einnehmen kann. Die Lagerung ist derart ausgeführt ist, dass diese eine durchgehende Drehung des Ventilkörpers gestattet, sodass der Ventilkörper ausgehend von der ersten Winkelstellung durch ein Drehen um die Drehachse mit einem Drehwinkel $\beta_n = \alpha + n \cdot 360°$ für jedes $n \in \mathbb{Z}$ in die zweite Winkelstellung verbracht werden kann.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

**Liste der Bezugszeichen**

| | |
|---|---|
| 10 | Ventilgehäuse |
| 11 | Innenkörper |
| 12 | Montagekörper |
| 13 | Klemmring |
| 14 | Dichtung |
| 20 | Ventilkörper |
| 21 | Verschlussabschnitt |
| 22 | Verbindungsabschnitt |
| 23 | Bedienabschnitt |
| 24 | Schraube |
| 25 | Ventilkörperdichtung |
| 30 | Ventildeckel |
| 31 | Deckeldichtung |
| 40 | Rückstellelement |
| 110 | Durchlassöffnung |
| 120 | Lagerabschnitt |
| 130 | Führungskontur |
| 210 | Führungsabschnitt |
| 1000 | Ventilvorrichtung |
| 2000 | Abschnitt der Außenhaut der aufblasbaren Struktur |
| 3000 | Wing |
| 3001 | Fronttube |

**Patentansprüche**

1. Aufblasbares Wassersportgerät, bei dem es sich insbesondere um ein Surfsportgerät handelt, vorzugsweis um ein Flügelrigg (3000) oder um einen Kite, und die aufblasbare Struktur vorzugsweise eine aufblasbare Fronttube (3001) des Kites oder des Flügelriggs (3000) oder eine aufblasbare Mittel- oder Quertubes des Kites oder des Flügelriggs (3000) ist wobei das Wassersportgerät zumindest eine aufblasbare Struktur mit einer Ventilvorrichtung (1000) umfasst, über die einem Innenraum der Struktur Luft zugeführt werden kann und die ein Ventilgehäuse (10) mit einer Durchlassöffnung (110) und einen über eine Lagerung beweglich am Ventilgehäuse (10) angebrachten Ventilkörper (20) zum luftdichten Verschließen der Durchlassöffnung (110) umfasst,

> der Ventilkörper (20) über die Lagerung um eine Drehachse gegenüber dem Ventilgehäuse (10) drehbar ist, wobei die Lagerung derart ausgeführt ist, dass der Ventilkörper (20) ausgehend von einer ersten Winkelstellung, in der der Ventilkörper (20) eine die Durchlassöffnung (110) verschließende Schließstellung einnehmen kann, durch ein Drehen um die Drehachse mit einem Betätigungswinkel $\alpha$, mit $0° < \alpha < 360°$, in eine zweite Winkelstellung verbracht werden kann, in der der Ventilkörper (20) eine die Durchlassöffnung (110) freigebenden Öffnungsstellung und keine Schließstellung einnehmen kann,
> und die Lagerung derart ausgeführt ist, dass diese eine durchgehende Drehung des Ventilkörpers (20) gestattet, sodass der Ventilkörper (20) ausgehend von der ersten Winkelstellung durch ein Drehen um die Drehachse mit einem Drehwinkel $\beta_n = \alpha + n \cdot 360°$ für jedes $n \in \mathbb{Z}$ in die zweite Winkelstellung verbracht werden kann.

2. Wassersportgerät nach Anspruch 1, wobei der Ventilkörper (20) über die Lagerung in der ersten und/oder der zweiten Winkelstellung arretiert ist, derart, dass ein Widerstand gegen ein Drehen des Ventilkörpers (20) aus der ersten und/oder zweiten Winkelstellung heraus größer ist, als ein Widerstand gegen ein Drehen aus einer Zwischenwinkelstellung, die zwischen der ersten und der zweiten Winkelstellung liegt.

3. Wassersportgerät nach einem der Ansprüche 1 oder 2, wobei der Ventilkörper (20) über die Lagerung entlang einer Hubachse gegenüber dem Ventilgehäuse (10) verschiebbar ist, wobei eine Richtung der Hubachse insbesondere einer Richtung der Drehachse entspricht.

4. Wassersportgerät nach Anspruch 3, wobei

ein Ventilhub in der ersten Winkelstellung ungleich einem Ventilhub in der zweiten Winkelstellung ist, wobei der Ventilhub den möglichen Bewegungsbereich für Hubbewegungen des Ventilkörpers relativ zum Ventilgehäuse entlang der Hubachse beschreibt,

und der Ventilhub in der ersten Winkelstellung vorzugsweise größer ist als der Ventilhub in der zweiten Winkelstellung.

5.  Wassersportgerät nach Anspruch 4, wobei

die Lagerung zumindest für die erste und für die zweite Winkelstellung des Ventilkörpers (20), vorzugsweise für jede Winkelstellung des Ventilkörpers (20), in Bezug auf einen körperfesten Hubreferenzpunkt des Ventilgehäuses (10), jeweils eine untere Hubendposition und eine obere Hubendposition, die den Ventilhub bestimmen und zwischen denen der Ventilkörper (20) in der jeweiligen Winkelstellung relativ zum Ventilgehäuse (10) entlang der Hubachse verschiebbar ist,

wobei zumindest eine untere Hubendposition in der ersten Winkelstellung ungleich einer unteren Hubendposition in der zweiten Winkelstellung ist und der Ventilkörper (20) die Schließstellung einnimmt, wenn sich dieser in der unteren Hubendposition in der ersten Winkelstellung befindet, und die Öffnungsstellung einnimmt, wenn sich dieser in der unteren Hubendposition in der zweiten Winkelstellung befindet.

6.  Wassersportgerät nach Anspruch 5, wobei die Lagerung eine Führungskontur (120) und einen oder mehrere auf diese angepasste Führungsabschnitte (210) aufweist, die durch Drehen des Ventilkörpers (20) relativ zueinander bewegbar sind, wobei die Führungskontur (120) durch Wechselwirkung mit den einen oder mehreren Führungsabschnitten (210) für jede Winkelstellung des Ventilkörpers (20) eine untere Hubendposition festlegt, wobei die Führungskontur (120) vorzugsweise als Teil des Ventilgehäuses (10) ausgeführt ist und die ein oder mehreren Führungsabschnitte (210) vorzugsweise als Teil des Ventilkörpers (20) ausgeführt sind.

7.  Wassersportgerät nach Anspruch 6, wobei eine Konturkurve der Führungskontur (120) in einer zur Drehachse orthogonalen Umfangsrichtung eine über einen Winkelbereich von 0° bis 360° stetige Kurve ist.

8.  Wassersportgerät nach einem der Ansprüche 5 bis 7, wobei die Ventilvorrichtung (1000) ein Rückstellelement (40) umfasst, insbesondere in Form einer elastischen Feder, das eine Rückstellkraft auf den Ventilkörper (20) ausübt, durch die der Ventilkörper (20) in der ersten Winkelstellung in der unteren Hubendposition der ersten Winkelstellung verspannt ist.

9.  Wassersportgerät nach einem der Ansprüche 1 bis 8, wobei
die Lagerung derart ausgeführt ist, dass der Ventilkörper (20) ausgehend von einer dritten Winkelstellung, die weder der ersten noch der zweiten Winkelstellung entspricht und in der der Ventilkörper (20) eine die Durchlassöffnung (110) verschließende weitere Schließstellung einnehmen kann, durch ein Drehen um die Drehachse mit einem Betätigungswinkel $\gamma$, mit $0° < \gamma < 360°$, in eine vierte Winkelstellung, die weder der ersten noch der zweiten Winkelstellung entspricht, verbracht werden kann, in der der Ventilkörper (20) eine die Durchlassöffnung (110) freigebende weitere Öffnungsstellung und keine Schließstellung einnehmen kann, wobei durch die die durchgehende Drehung gestattende Lagerung der Ventilkörper (20) ausgehend von der dritten Winkelstellung durch ein Drehen um die Drehachse mit einem Drehwinkel $\delta_n = \gamma + n \cdot 360°$ für jedes $n \in \mathbb{Z}$ in die vierte Winkelstellung verbracht werden kann.

10. Wassersportgerät nach Anspruch 9, wobei
die Lagerung derart ausgeführt ist, dass der Ventilkörper (20) ausgehend von der zweiten Winkelstellung durch ein Drehen um die Drehachse mit einem Betätigungswinkel $\theta$, mit $0° < \theta < 360°$, in die dritte Winkelstellung verbracht werden kann und $\alpha + \gamma + \theta < 360°$ gilt, wobei vorzugsweise $80° \leq \alpha \leq 100°$ und/oder $80° \leq \delta \leq 100°$ und/oder $80° \leq \theta \leq 100°$ gilt, wobei die Lagerung insbesondere derart ausgeführt ist, dass der Ventilkörper (20) ausgehend von der dritten Winkelstellung durch ein Drehen um die Drehachse mit einem Betätigungswinkel $\phi$, mit $0° < \phi < 360°$, in die erste Winkelstellung verbracht werden kann und vorzugsweise $\alpha + \gamma + \theta + \phi = 360°$ gilt.

11. Wassersportgerät nach einem der Ansprüche 1 bis 10, wobei
der Ventilkörper (20) einen auf die Durchlassöffnung (110) angepassten Verschlussabschnitt (21), einen Bedienabschnitt (23), über den der Ventilkörper (20) gedreht werden kann, und einen dazwischen angeordneten Verbindungsabschnitt (22) umfasst, wobei die Lagerung insbesondere im Bereich des Verbindungsabschnitts (22) angreift.

12. Ventilvorrichtung (1000) zum Einsatz an einem Wassersportgerät, insbesondere eine Ventilvorrichtung (1000) eines Wassersportgeräts nach einem der Ansprüche 1 bis 11, umfassend ein Ventilgehäuse (10) mit einer Durchlassöffnung (110) und einen über eine Lagerung beweglich am Ventilgehäuse (10)

angebrachten Ventilkörper (20) zum luftdichten Verschließen der Durchlassöffnung (110),

wobei der Ventilkörper (20) über die Lagerung um eine Drehachse gegenüber dem Ventilgehäuse (10) drehbar ist, derart, dass der Ventilkörper (20) ausgehend von einer ersten Winkelstellung, in der der Ventilkörper (20) eine die Durchlassöffnung (110) verschließende Schließstellung einnehmen kann, durch ein Drehen um die Drehachse mit einem Betätigungswinkel β, mit 0°< β ≤ 180°, in eine zweite Winkelstellung verbracht werden kann, in der der Ventilkörper (20) eine die Durchlassöffnung (110) freigebenden Öffnungsstellung und keine Schließstellung einnehmen kann,
und die Lagerung derart ausgeführt ist, dass diese eine durchgehende Drehung des Ventilkörpers (20) gestattet, sodass der Ventilkörper (20) ausgehend von der ersten Winkelstellung durch ein Drehen um die Drehachse mit einem
Drehwinkel $\alpha_n = \beta + n \cdot 360°$ für jedes $n \in \mathbb{Z}$ in die zweite Winkelstellung verbracht werden kann.

13. Ventilvorrichtung (1000) nach Anspruch 12, wobei

der Ventilkörper (20) einen auf die Durchlassöffnung (110) angepassten Verschlussabschnitt (21), einen Bedienabschnitt (23), über den der Ventilkörper (20) gedreht werden kann, und einen dazwischen angeordneten Verbindungsabschnitt (22) umfasst, wobei die Lagerung insbesondere im Bereich des Verbindungsabschnitts (22) angreift,
das Ventilgehäuse (10) einen Befestigungsabschnitt aufweist, der auf einen Anschlussadapter, der zum Einsatz mit einer Pumpenvorrichtung eingerichtet ist, angepasst ist, derart, dass der Anschlussadapter durch ein Einführen und ein Drehen gegenüber dem Ventilgehäuse (10) mit dem Befestigungsabschnitt in Wechselwirkung gebracht werden kann, um den Anschlussadapter lösbar am Ventilgehäuse (10) zu befestigen, und der befestigte Anschlussadapter durch ein Drehen und ein Herausziehen aus dem Ventilgehäuse (10) vom Befestigungsabschnitt getrennt werden kann, um den befestigten Anschlussadapter vom Ventilgehäuse (10) zu lösen.

14. Ventilvorrichtung nach Anspruch 13, wobei

der Bedienabschnitt (23) des Ventilkörpers (20) auf einen Betätigungsabschnitt des Anschlussadapters derart angepasst ist, dass durch das Einführen und Drehen des Anschlussadapters zum Herstellen der lösbaren Befestigung des Anschlussadapters am Ventilgehäuse (20) der Betätigungsabschnitt über Wechselwirkung mit dem Bedienabschnitt (23) den Ventilkörper (20) ausgehend von einer Winkelstellung, die nicht die erste Winkelstellung ist, in die erste Winkelstellung dreht,
und/oder der Bedienabschnitt (23) des Ventilkörpers (20) auf den Betätigungsabschnitt des Anschlussadapters derart angepasst ist, dass durch das Drehen des befestigten Anschlussadapters zum Lösen der Befestigung des Anschlussadapters am Ventilgehäuse (20) der Betätigungsabschnitt über Wechselwirkung mit dem Bedienabschnitt (23) den Ventilkörper (20) ausgehend von einer Winkelstellung, die nicht die erste Winkelstellung ist, in die erste Winkelstellung dreht.

15. Ventilsystem zum Einsatz an einem Wassersportgerät, insbesondere eines Wassersportgeräts nach einem der Ansprüche 1 bis 11, umfassend:

- einen Anschlussadapter, der mit einem Auslass einer Pumpenvorrichtung verbindbar ist, und
- eine Ventilvorrichtung (1000) nach Anspruch 14,

wobei der Anschlussadapter auf den Befestigungsabschnitt des Ventilgehäuses (10) der Ventilvorrichtung (1000) angepasst ist, derart, dass der Anschlussadapter durch ein Einführen und ein Drehen gegenüber dem Ventilgehäuse (10) mit dem Befestigungsabschnitt in Wechselwirkung gebracht werden kann, um den Anschlussadapter lösbar am Ventilgehäuse (10) zu befestigen, und der befestigte Anschlussadapter durch ein Drehen und ein Herausziehen aus dem Ventilgehäuse (10) vom Befestigungsabschnitt getrennt werden kann, um den befestigten Anschlussadapter vom Ventilgehäuse (10) zu lösen,
und der Anschlussadapter einen Betätigungsabschnitt aufweist, der auf den Bedienabschnitt (23) des Ventilkörpers (20) der Ventilvorrichtung (1000) angepasst ist, derart, dass durch das Einführen und Drehen des Anschlussadapters zum Herstellen der lösbaren Befestigung des Anschlussadapters am Ventilgehäuse (20) der Betätigungsabschnitt über Wechselwirkung mit dem Bedienabschnitt (23) den Ventilkörper (20) ausgehend von einer Winkelstellung, die nicht die erste Winkelstellung ist, in die erste Winkelstellung dreht,
und/oder der Bedienabschnitt (23) des Ventilkörpers (20) auf den Betätigungsabschnitt

**EP 4 741 274 A1**

des Anschlussadapters derart angepasst ist, dass durch das Drehen des befestigten Anschlussadapters zum Lösen der Befestigung des Anschlussadapters am Ventilgehäuse (20) der Betätigungsabschnitt über Wechselwirkung mit dem Bedienabschnitt (23) den Ventilkörper (20) ausgehend von einer Winkelstellung, die nicht die erste Winkelstellung ist, in die erste Winkelstellung dreht.

Fig. 1A

Fig. 1B

15

Fig. 1C

Fig. 1D

Fig. 2A

Fig. 2B

Fig. 2C

Fig. 3

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 23 940 B (GRAUBREMSE GMBH) 6. Februar 1958 (1958-02-06) | 12-14 | INV. B63B7/00 |
| Y | * Zusammenfassung; Abbildungen * * Spalte 3, Zeile 25 - Zeile 28 * ----- | 1-11,15 | B63B32/40 B63H8/00 F16K15/18 |
| Y | FR 3 095 489 A1 (DECATHLON SA [FR]) 30. Oktober 2020 (2020-10-30) * Zusammenfassung; Abbildungen * * Absatz [0055] * ----- | 1-11,15 | F16K15/20 F16K31/524 |
| A | WO 2016/059179 A1 (BOARDS & MORE GMBH [AT]) 21. April 2016 (2016-04-21) * Zusammenfassung; Abbildungen * ----- | 1 | |
| A | CN 108 087 604 A (SHENZHEN JIANYING TECH CO LTD) 29. Mai 2018 (2018-05-29) * Zusammenfassung; Abbildungen * ----- | 1 | |

**RECHERCHIERTE SACHGEBIETE (IPC)**

B63B
F16K
B63H

Der vorliegende Recherchenbericht wurde für alle Patentansprüche erstellt

| Recherchenort | Abschlußdatum der Recherche | Prüfer |
|---|---|---|
| Den Haag | 29. November 2025 | Balzer, Ralf |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 0749

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2025

| Im Recherchenbericht angeführtes Patentdokument | Datum der Veröffentlichung | Mitglied(er) der Patentfamilie | Datum der Veröffentlichung |
|---|---|---|---|
| DE 1023940 B | 06-02-1958 | KEINE | |
| FR 3095489 A1 | 30-10-2020 | CN 212986099 U<br>FR 3095489 A1 | 16-04-2021<br>30-10-2020 |
| WO 2016059179 A1 | 21-04-2016 | DE 102015105719 A1<br>DE 202015009651 U1<br>WO 2016059179 A1 | 21-04-2016<br>29-10-2018<br>21-04-2016 |
| CN 108087604 A | 29-05-2018 | CN 108087604 A<br>WO 2019141021 A1 | 29-05-2018<br>25-07-2019 |

EPO FORM P0461

Für nähere Einzelheiten zu diesem Anhang : siehe Amtsblatt des Europäischen Patentamts, Nr.12/82